# EUROPÄISCHE PATENTSCHRIFT

(11) **EP 0 304 393 B1**
(45) Veröffentlichungstag und Bekanntmachung des Hinweises auf die Patenterteilung: **12.01.1994**
(21) Anmeldenummer: 88730116.6
(22) Anmeldetag: 13.05.1988
(51) Int. Cl.: H04Q 1/14

(54) **Vorrichtung zur Halterung von Anschlussleisten der Fernmeldetechnik**
Device for holding telecommunication connector blocks
Dispositif de fixation de blocs de connexion en télécommunication

(30) Priorität: 21.08.1987 DE 3728368
(43) Veröffentlichungstag der Anmeldung: 22.02.1989
(73) Patentinhaber: KRONE Aktiengesellschaft, D-14167 Berlin (DE)
(72) Erfinder: Gerke, Dieter, D-1000 Berlin 27 (DE); Biederstedt, Lutz, D-1000 Berlin 37 (DE); Klaiber, Eberhard, D-7000 Stuttgart 1 (DE); Müller, Manfred, D-1000 Berlin 65 (DE)

(56) Entgegenhaltungen:
- EP-A- 0 133 824
- DE-A- 2 846 948

## Beschreibung

Die Erfindung bezieht sich auf eine Vorrichtung zur Halterung von Anschlußleisten der Fernmeldetechnik gemäß dem Oberbegriff des Anspruches 1.

Eine Vorrichtung der gattungsgemäßen Art ist aus der EP-A-0133 824 vorbekannt. Bei dieser Vorrichtung sind an der Unterseite im Bereich der Stirnseiten zwei nach unten ragende Rasthaken vorgesehen. Diese Rasthaken werden zur Befestigung der Anschlußleiste auf einer Schiene hinter zwei Kanten dieser Schiene geklemmt. Nachteilig bei dieser Befestigung ist, daß die Anschlußleiste auf der Schiene nur schwer verschiebbar ist und leicht verkantet werden kann. Ferner ist ein Verdrehen bzw. Verschwenken um die eine Kante der Schiene nicht möglich. Die scharfen Kanten stellen somit eine Verletzungsgefahr dar.
Ferner ist aus der DE 28 11 812 eine Vorrichtung bekannt, die als Montagegestell einen U-förmig gebogenen Montagebügel verwendet, dessen Seitenwände mit Laschen als Verbindungselemente zum Aufstecken der Anschlußleisten versehen sind. Ein solcher Montagebügel kann freistehend bei Hauptverteilern oder als Wandverteiler eingesetzt werden. Nachteilig hierbei ist, daß die Laschen eine Verletzungsgefahr beinhalten, sofern keine Anschlußleisten aufgesteckt sind. Nachteilig ist ferner, daß die Laschen die Teilung und damit den Abstand der Anschlußleisten voneinander vorgeben, so daß für eine andere Teilung oder eine andere Montagegestellhöhe ein anderer Montagebügel mit anderer Teilung der Laschen verwendet werden muß.

Der Erfindung liegt von daher die Aufgabe zugrunde, eine Vorrichtung zur Halterung von Anschlußleisten der gattungsgemäßen Art zu schaffen, bei welcher vom Montagegestell keine Verletzungsgefahr ausgeht und bei welcher ferner eine variable Teilung, d. h. ein variabler Abstand der Anschlußleisten voneinander einstellbar ist.

Die Lösung dieser Aufgabe ergibt sich aus den kennzeichnenden Merkmalen des Anspruches 1. Erfindungsgemäß wird als Montagegestell eine Profilschiene verwendet, deren durchgehendes Profil auch ohne an diesem befestigte Anschlußleisten keine Verletzungsgefahr hervorruft. Erfindungsgemäß werden die Anschlußleisten ferner mit bogenförmigen Schnappelementen als Verbindungselemente auf die Profilschiene mit kreisrundem Querschnitt aufgerastet, auf welcher die Anschlußelemente verschiebbar sind. Dadurch kann die Teilung, d. h. der Abstand der Anschlußleisten voneinander, frei gewählt werden. Außerdem ist es möglich, die auf die Profilschiene aufgerastete Anschlußleiste zunächst zu verdrahten und erst anschließend auf den gewünschten Abstand zu einer bereits verdrahteten Anschlußleiste zu verschieben.

Weitere vorteilhafte Ausgestaltungen der Erfindung ergeben sich aus den abhängigen Ansprüchen. Hierbei wird insbesondere auf die Ausführungsform mit zwei parallelen Profilschienen hingewiesenn. Die Verwendung derartiger Rundprofilstäbe hat den Vorteil, daß die Anschlußleiste einseitig von einem Rundprofilstab entrastet werden kann, um den anderen Rundprofilstab gedreht und aus der Reihe der Anschlußleisten herausgeklappt werden kann. Damit wird die Leiste leicht von allen Seiten her zugänglich.

Die Erfindung ist nachfolgend anhand mehrerer in den Zeichnungen dargestellter Ausführungsformen von Halterungsvorrichtungen für Anschlußleisten der Fernmeldetechnik näher erläutert. Es zeigen:
- Fig. 1: Eine Perspektivdarstellung eines Wandverteilers für fünf vertikale Reihen von Anschlußleisten,
- Fig. 2: eine Perspektivdarstellung des linken Endteiles eines freistehenden Kabelverzweigers,
- Fig. 3: eine Perspektivdarstellung eines säulenartigen Kabelverzweigergestelles für vier, jeweils um 90° versetzt zueinander angeordneten vertikale Reihen von Anschlußleisten,
- Fig. 4: ein durch Universal-Verbindungselemente gebildetes Kabelverzweigergestell für Anschlußleisten in beliebiger Größe und Ausführungsform,
- Fig. 5: eine Perspektivdarstellung einer Kabelanschlußeinheit,
- Fig. 6: das vergrößert dargestellte Detail VI aus Fig. 1,
- Fig. 7: das vergrößert dargestellte Detail VII aus Fig. 2 in der anfänglichen Montagestellung der Rundprofilstäbe,
- Fig. 8: die Endmontagestellung eines Rundprofilstabes gem. Fig. 6,
- Fig. 9: eine perspektivische Darstellung einer mit bogenförmigen Ansätzen zum Aufrasten auf Rundprofilstäbe versehene Anschlußleiste,
- Fig. 10: eine perspektivische Darstellung der Unterseite der Anschlußleiste gemäß Fig. 9, mit darunter befindlichem Erdungsclip,
- Fig. 11: den Erdungsclip gemäß Fig. 10 in vergrößerter Darstellung,
- Fig. 12: vom laufenden Meter abbrechbare Distanzclips zum Aufrasten auf Rundprofilstäbe,
- Fig. 13: einzelne, auf Rundprofilstäbe aufrastbare Distanzclips,
- Fig. 14: ein auf zusammengesteckte Aufnahmeelemente aufgerasteter Rundprofilstab,
- Fig. 15: ein einzelnes Aufnahmeelement gemäß Fig. 4,
- Fig. 16: ein in eine Tragschiene eingeschobener Rastclip zum Aufstecken von Aufnahmeelementen für einen Rundprofilstab,
- Fig. 17: das Universalverbindungselement gemäß Fig. 4 in detaillierter und vergrößerter Darstellung,
- Fig. 18: eine Perspektivdarstellung eines auf eine flache Platte mittels Montageadaptern aufschraubbaren Anschlußleiste,
- Fig. 19: eine Seitenansicht ineinandersteckbarer Erdkontaktlaschen zum Einstecken in die Anschlußleisten,
- Fig. 20: eine Perspektivdarstellung einer auf eine flache Platte aufgeschraubte Anschlußleiste,
- Fig. 21: eine Perspektivdarstellung eines Aufnahmebleches zum Aufrasten von mit bogenförmigen Ansätzen versehenen Anschlußleisten,
- Fig. 22: eine Seitenansicht des Aufnahmebleches mit einer aufgerasteten Anschlußleiste,
- Fig. 23: eine Perspektivdarstellung einer Anschlußleiste mit darüber befindlicher Drahtführungsplatte vor der Montage,
- Fig. 24: eine Perspektivdarstellung der Anschlußleiste gemäß Fig. 23 mit angeklemmter Drahtführungsplatte,
- Fig. 25: eine Perspektivdarstellung einer mit bogenförmigen Ansätzen versehenen Anschlußleiste mit Zugentlastungselementen zur Aufnahme eines Flachbandkabels,
- Fig. 26: eine Seitenansicht hierzu mit einem Flachbandkabel im montierten Zustand, und
- Fig. 27: eine Seitenansicht auf ein 19¨ Gehäuse mit einer Rückwandverdrahtungsleiste.

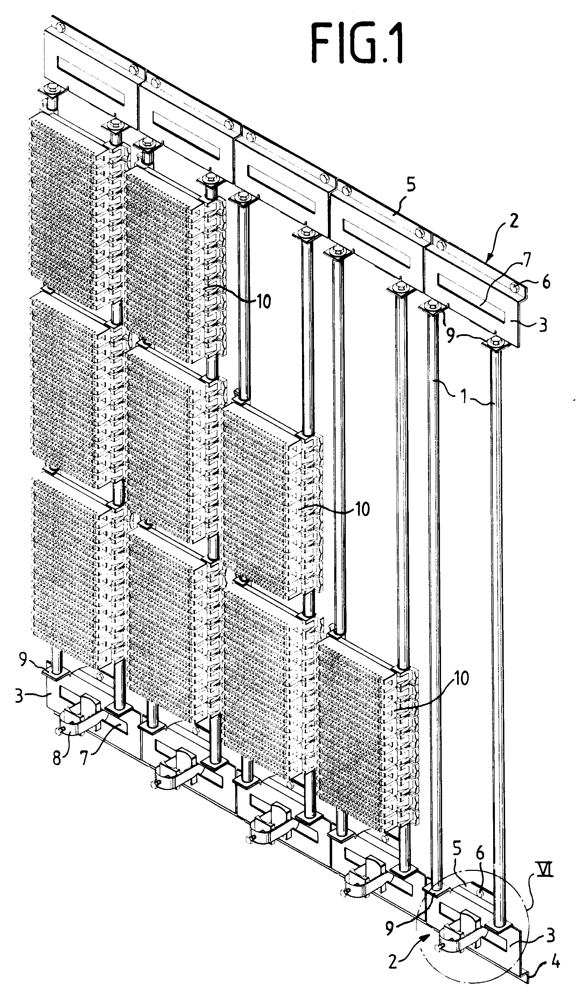

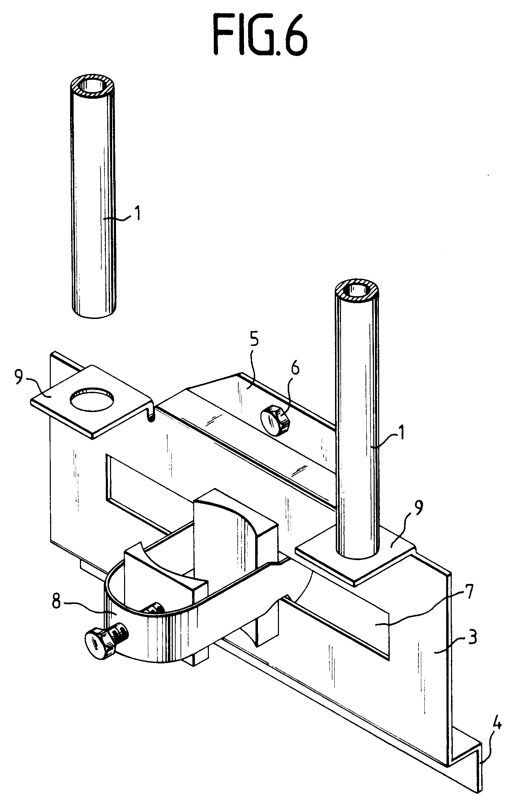

Der in Fig. 1 dargestellte Wandverteiler umfaßt fünf Paare von parallel zueinander angeordneten, Profilschienen bildenden Rundprofilstäben 1, die am oberen und unteren Ende mittels Gestellteilen 2 an einer Wand befestigt sind. Das untere Gestellteil 2 ist eine in Fig. 6 näher dargestellte Grundplatte 3, die als Winkelblech ausgebildet ist, welches am unteren Ende eine Abstützleiste 4 und am oberen Ende eine Schraubplatte 5 aufweist, die jeweils mittels Schrauben 6 an einer nicht dargestellten Wand festgelegt sind. In einem sich horizontal erstreckenden Schlitz 7 ist eine Schellenklemme 8 zur Befestigung eines anzuschließenden Kabels angeordnet. An der Oberseite der Grundplatte 3 sind Laschen 9 abgewinkelt, welche die unteren Enden der Rundprofilstäbe 1 aufnehmen.

Die an den oberen Enden der Rundprofilstäbe 1 vorgesehenen Gestellteile 2 sind entsprechenden den in Fig. 6 näher dargestellten Grundplatten 3 ausgebildet, jedoch um 180° gedreht montiert. In den Laschen 9 sind die oberen Enden der Rundprofilstäbe 1 fixiert.

Auf die parallel zueinander verlaufenden Rundprofilstäbe 1 sind Anschlußleisten 10 aufgerastet, welche später noch näher beschrieben werden.

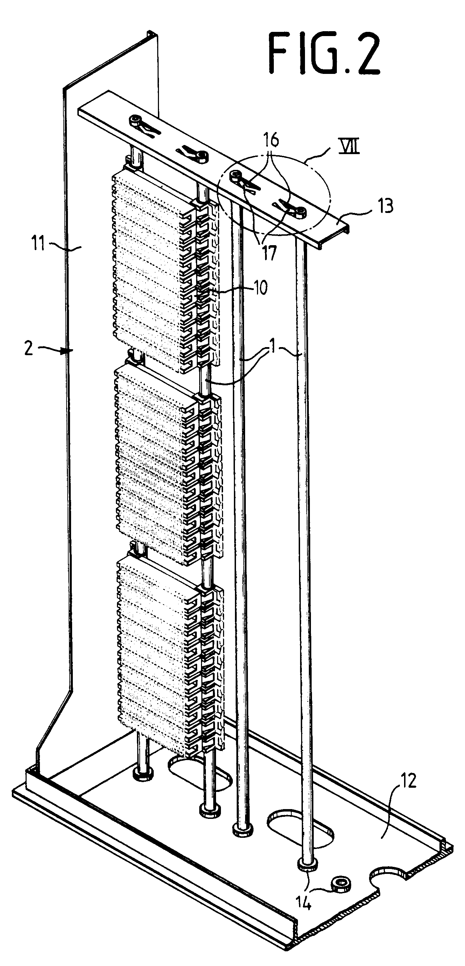

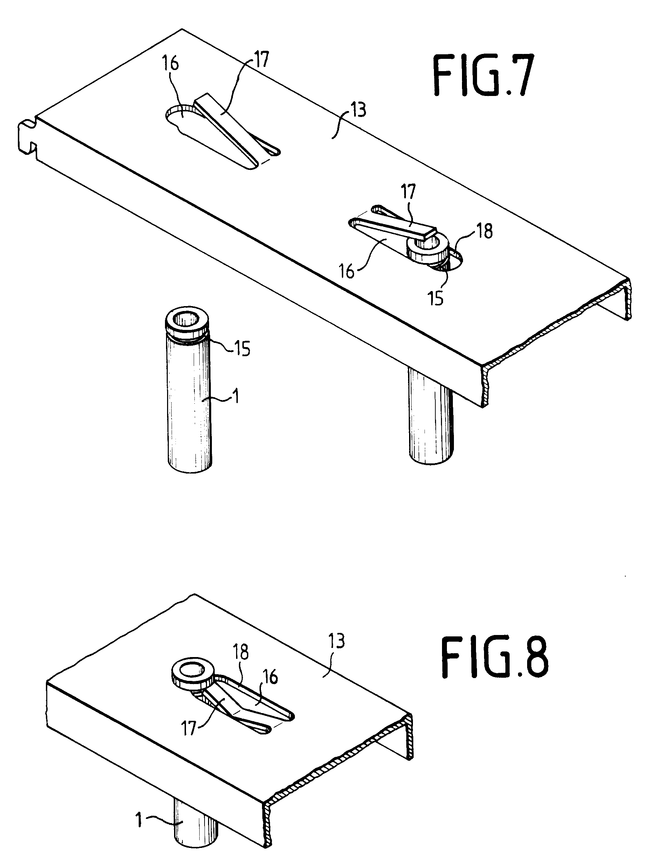

Die Fig. 2 zeigt das linke Ende eines freistehenden Kabelverzweigers, dessen Gestellteile 2 aus einer Bodenplatte 12, einer oberen Abschlußplatte 13 und einer Seitenwand 11 gebildet sind, welche die Bodenplatte 12 und die Abschlußplatte 13 starr miteinander verbindet. Die Rundprofilstäbe 1 sind in auf die Bodenplatte 12 aufgesetzte Lagerstellen 14 eingesteckt und mit der oberen Abschlußplatte 13 klemmend verbunden, wie es in den Fig. 7 und 8 näher dargestellt ist. Dabei weisen die Rundprofilstäbe 1 an ihren oberen Enden Ringnuten 15 und die Abschlußplatten 13 Schlitze 16 auf, welche mit unterschiedlichen Schlitzweiten versehen sind und welche je einen in Schlitzrichtung verlaufenden Klemmsteg 17 aufweisen, der aus dem metallischen Material der Abschlußplatten 13 ausgebildet ist. Die oberen Enden der Rundprofilstäbe 1 werden in den jeweiligen Schlitz 16 derart eingesteckt, daß die Rundprofilstäbe 1 zunächst durch den Schlitzteil mit einer Weite, die größer ist als der Durchmesser der Rundprofilstäbe 1, eingesteckt und anschließend in Längsrichtung des Schlitzes 16 in einen Schlitzteil verschoben werden, dessen Weite kleiner ist als der Durchmesser der Rundprofilstäbe 1. Hierbei greifen die Schlitzwände 18 in die Ringnut 15 des jeweiligen Rundprofilstabes 1 ein, wie es in Fig. 7 dargestellt ist. Anschließend wird der Rundprofilstab 1 bis zu dem freien Ende des Klemmsteges 17 gegenüberliegenden Ende des Schlitzes 16 gedrückt, woraufhin der Klemmsteg 17 gemäß Fig. 8 durch Verformung in den freien Teil der Ringnut 15 eingestemmt wird. Der Rundprofilstab 1 ist dann sicher mit der oberen Abschlußplatte 13 als Gestellteil 2 verbunden.

Auf die jeweils in bestimmten vorgegebenen Abstand parallel zueinander angeordneten Rundprofilstäbe 1 sind Anschlußleisten 10 aufgerastet, welche später noch näher beschrieben werden.

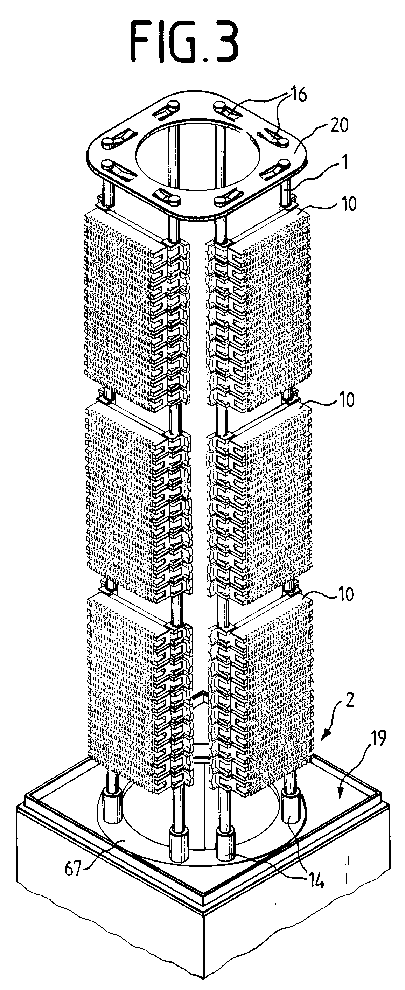

Die Fig. 3 zeigt die Anordnung von vier vertikalen Reihen von Anschlußleisten in Form eines Säulenkabelverzweigers, wobei die Reihen von Anschlußleisten jeweils um 90° versetzt zueinander, um eine kreisförmige Grundfläche herum gruppiert sind. Die zweigeteilte Bodenplatte 19 des Gestellteiles 2 ist - ähnlich wie die Bodenplatte 12 gemäß Fig. 2 - mit hülsenartigen Lagerstellen 14 versehen, in welche die unteren Enden der Rundprofilstäbe 1 eingesteckt sind. Die obere Abschlußplatte 20 des Gestellteiles 2 ist entsprechend der oberen Abschlußplatte 13 gemäß den Figuren 7 und 8 mit Schlitzen 16 versehen, mit welchen die oberen Enden der Rundprofilstäbe 1 in gleicher Weise, wie es in den Fig. 7 und 8 dargestellt ist, verbunden sind. Die Bodenplatte 19 und die obere Abschlußplatte 20 sind im wesentlichen quadratisch ausgebildet, wobei jeweils zwei Rundprofilstäbe 1 auf einer Seite angeordnet sind. Auf die Rundprofilstäbe 1 sind Anschlußleisten 10 aufgerastet, welche später noch näher beschrieben werden. Der Säulenkabelverzweiger ist um seine Längsachse drehbar. Hierzu besitzt die Bodenplatte 19 ein mittleres Ringteil 67 welches zur Bodenplatte 19 drehbar ist.

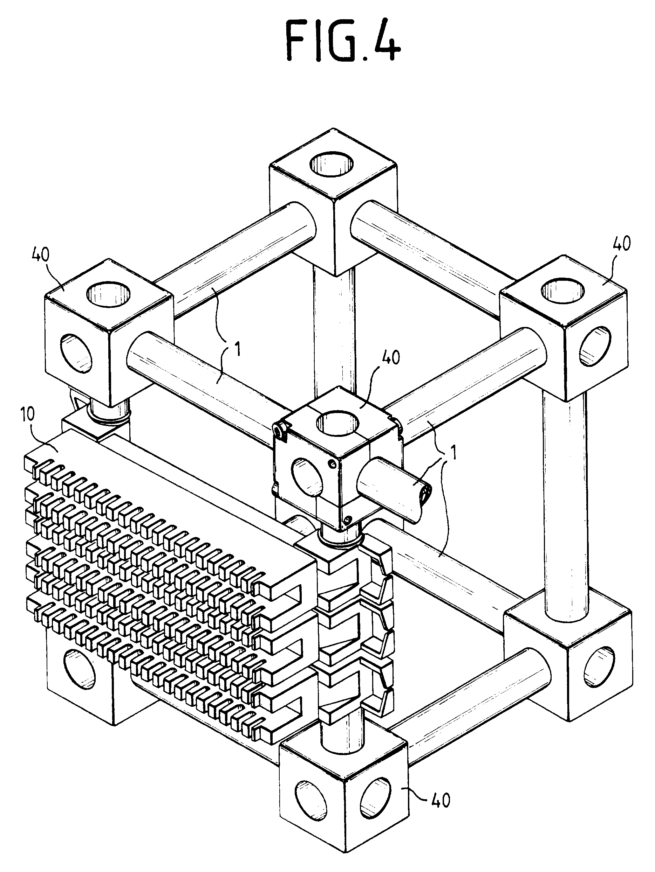

Die Fig. 4 zeigt ein durch mehrere Universal-Verbindungselemente 40 gebildetes Kabelverzweigergestell für Anschlußleisten 10, das in beliebiger Größe in allen drei Raumebenen ausbaufähig ist. Die in den Knotenpunkten dieser Rundprofilstäbe 1 angeordneten Verbindungselemente 40 werden später noch näher beschrieben werden.

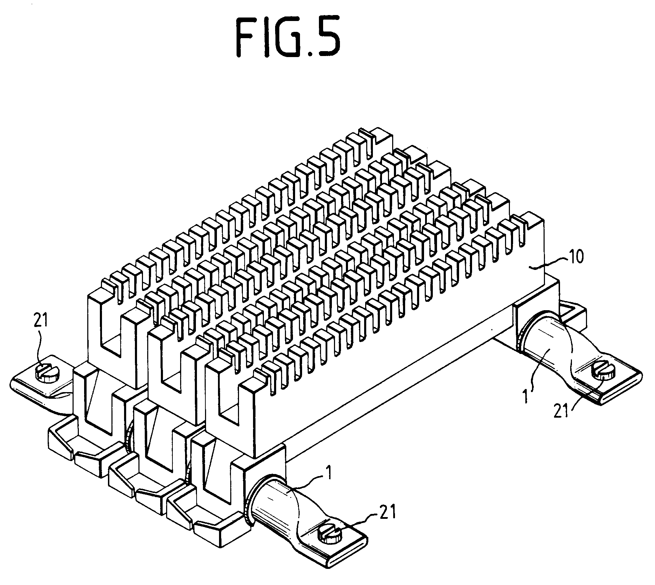

Die Fig. 5 zeigt zwei parallel zueinander angeordnete und mittels Schrauben 21 auf einem nicht näher dargestellten Gestellteil 2 befestigte Rundprofilstäbe1, auf welche Anschlußleisten 10 in später noch beschriebener Weise aufgerastet sind. Diese Anordnung dient zum Einbau z.B. in einen Endverzweiger.

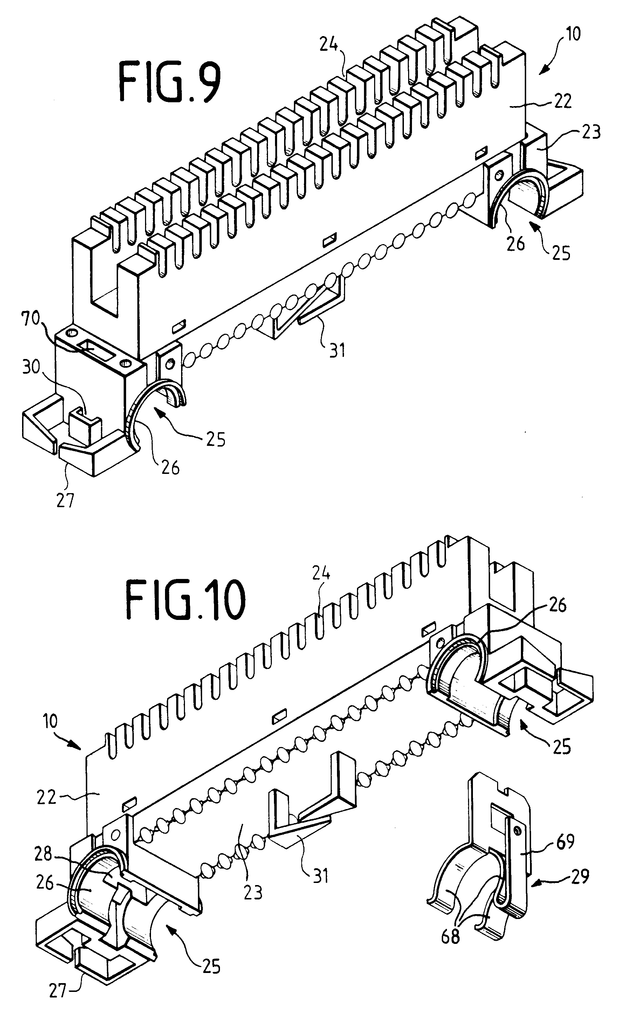

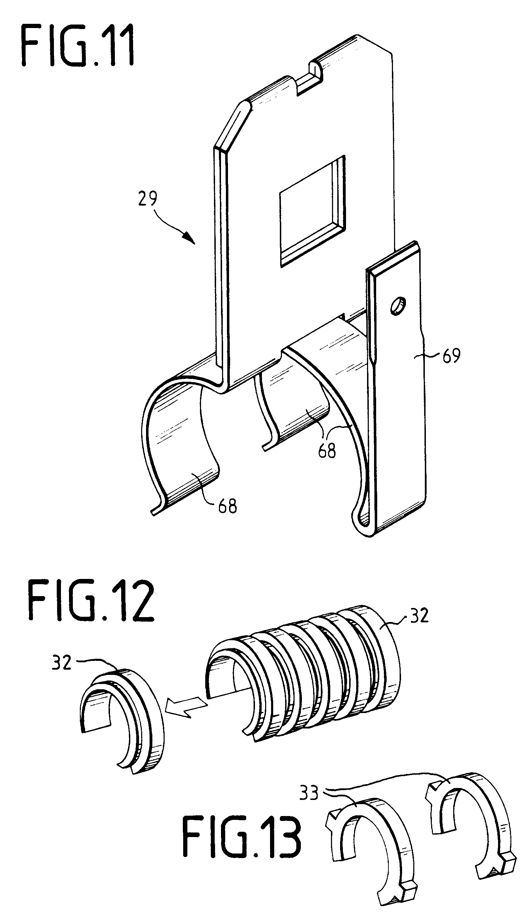

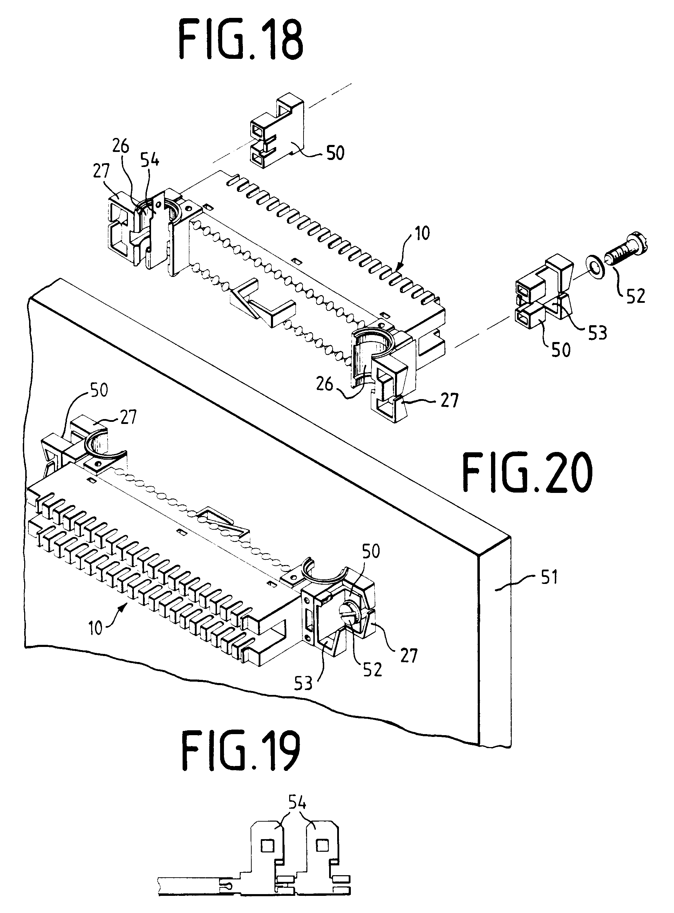

Die Figuren 9 und 10 zeigen eine Anschlußleiste 10 in perspektivischen Darstellungen schräg von oben und schräg von unten. Die Anschlußleiste 10 besteht aus einem Oberteil 22 und einem Unterteil 23, die jeweils aus Kunststoff ausgebildet und miteinander verrastet sind. In nicht näher dargestellter Weise sind in Schlitze 24 Schneid-Klemmkontakte eingesetzt, die zum Anschließen von Anschlußdrähten dienen. Eine solchen Anschlußleiste, bestehend aus einem Unterteil und einem mit diesem verrasteten Oberteil sowie darin eingesetzten Schneid-Klemmkontaktelementen ist in der DE 28 04 478 näher beschrieben, auf welche ausdrücklich bezug genommen wird. Im Unterschied zum bekannten Unterteil weist das Unterteil der Anschlußleiste 10 auf beiden Seiten Verbindungselemente 25 auf, die aus an das Unterteil 23 einstückig angeformten bogenförmigen Ansätzen 26 gebildet sind, welche einen Umfangswinkel von mehr als 180° umschließen. Der Innendurchmesser der bogenförmigen Ansätze 26 entspricht dem Außendurchmesser der Rundprofilstäbe 1.Aufgrund der Ausbildung der Anschlußleisten 10 und insbesondere des Unterteiles 23 aus Kunststoff sind die Seitenwände der bogenförmigen Ansätze 26 elastisch, so daß diese über den Rundprofilstab 1 gedrückt und auf diese aufgerastet werden können. Die bogenförmigen Ansätze 26 tragen auf der Außenseite rechteckige Drahtführungslaschen 27, welche mittig eingeschlitzt sind. Parallel zu den Außenwänden des Oberteiles 22 erstrecken sich Durchtrittsschlitze 28 durch die bogenförmigen Ansätze 26 hindurch, in welche metallische Erdkontaktlaschen 29 (Fig. 11) eingesteckt werden können, welche auf die am Erdpotential liegenden Rundprofilstäbe 1 aufgeklemmt werden und auf welche von oben nicht näher dargestellte Kontaktklemmen eines in die Anschlußleiste 10 einsteckbaren Überspannungsableitermagazines aufklemmbar sind, wie es in der DE 28 11 812 näher beschrieben ist. Die Erdkontaktlaschen 29 besitzen im unteren Bereich drei bogenförmige Laschen 68, deren Innenkontur den Rundprofilstäben 1 nachgebildet ist. An einer Lasche 68 der Erdkontaktlasche 29 ist eine Kontaktierungszunge 69 angeformt, die wie die später noch beschriebene Erdkontaktlasche 54 gemäß Fig. 19 ausgebildet ist, und die in eine nach oben offene Kammer 70 der Anschlußleiste 10 eingreift. Das Unterteil 23 der Anschlußleiste 10 weist ferner auf der Außenseite der bogenförmigen Ansätze 26 Einsteckschlitze 30 auf, welche zum Aushebeln der Anschlußleiste 10 aus der mit einem Rundprofilstab 1 verasteten Stellung mittels eines nicht näher dargestellten Schraubenziehers dienen. Ferner sind auf der Unterseite des Unterteiles 23 weitere Drahtführungslaschen 31 ausgebildet.

Zur Anordnung der Anschlußleisten 10 auf den Rundprofilstäben 1 mit einem gewünschten gleichen Abstand sind gemäß den Figuren 12 und 13 Distanzclips 32 und 33 aus Kunststoff vorgesehen. Die Distanzclips 32 gemäß Fig. 12 sind als stangenartige Meterware vorgefertigt und einzeln abbrechbar. Die Distanzclips 33 sind einzeln aus Kunststoff ausgeformt. Beide Distanzclips 32, 33 sind aus Ringscheibenteilen gebildet, deren Öffnungswinkel kleiner als 180° ist, so daß diese aufgrund ihrer elastischen Ausbildung auf die Rundprofilstäbe 1 aufrastbar sind, denn der Innendurchmesser der Distanzclips 32, 33 entspricht dem Außendurchmesser der Rundprofilstäbe 1.

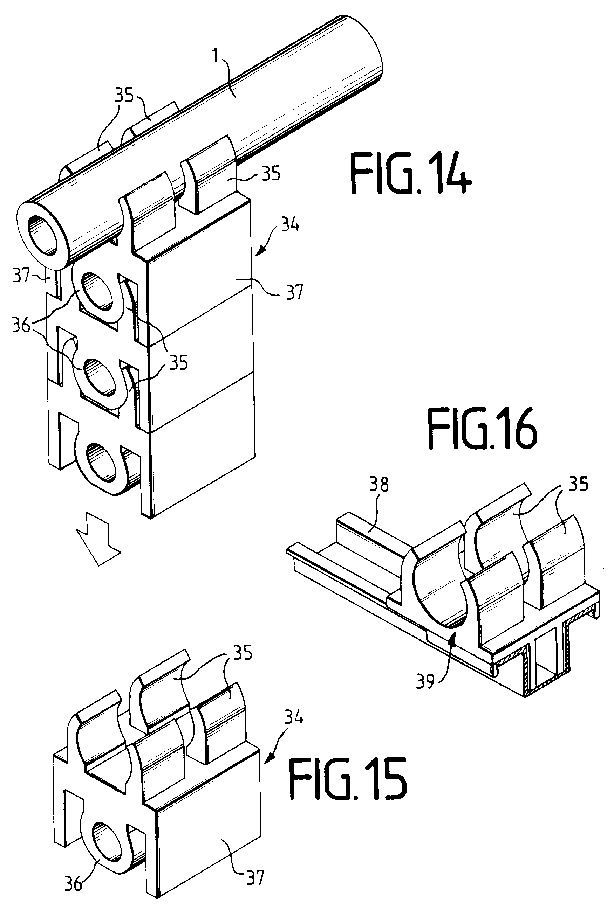

Die Figuren 14 und 15 zeigen zusammensteckbare Aufnahmeelemente 34 aus Kunststoff für die metallischen Rundprofilstäbe 1. Die Aufnahmeelemente 34 bestehen aus zwei Paaren oberseitig angebrachter Klemmlaschen 35, in welche gemäß Fig. 12 die Rundprofilstäbe 1 einrastbar sind, sowie aus unteren Rohrprofilstücken 36 aus Kunststoff, welche von äußeren Seitenwänden 37 umgeben sind. Wie es Fig. 14 zeigt, greifen die oberen Klemmlaschen 35 eines unteren Aufnahmeelementes 34 zwischen die Seitenwände 37 eines oberen Aufnahmeelementes 34 ein und umklammern die unteren Rohrprofilstücke 36 des Aufnahmeelementes 34 ähnlich wie die oberen Klemmlaschen 35 einen Rundprofilstab 1 umklammern. Die Aufnahmeelemente 34 dienen zur Herstellung eines Abstandes der Rundprofilstäbe 1 von einem nicht näher dargestellten Gestellteil 2.

Gemäß Fig. 16 kann ein solches Gestellteil 2 aus einer Tragschiene 38 gebildet sein, auf welche ein besonders ausgebildeter Rastclip 39 aufgeschoben ist, der oberseitig Klemmlaschen 35 trägt, mit welchen der Rastclip 39 mit Aufnahmeelementen 34 gemäß Fig. 14 und 15 verbindbar ist, um so Rundprofilstäbe 1 in gewünschtem Abstand zu Tragschienen 38 anordnen zu können.

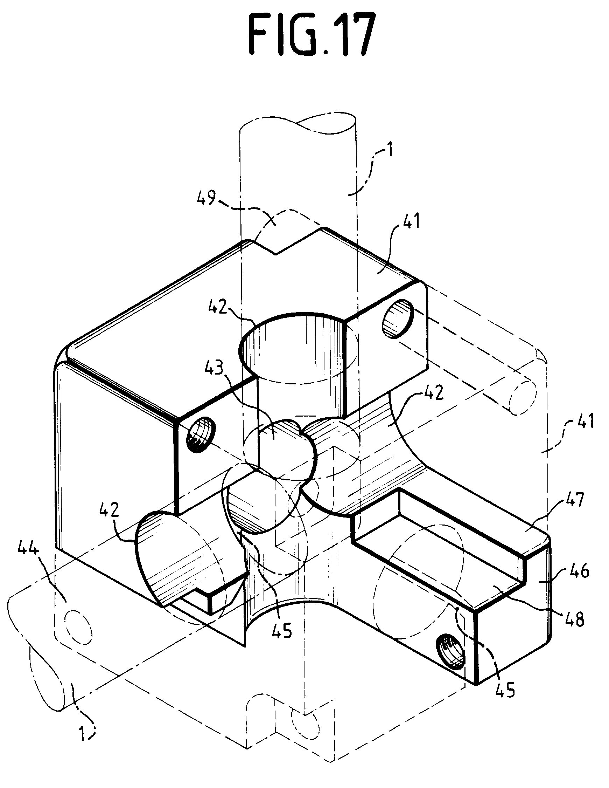

Die Fig. 17 zeigt ein Universal-Verbindungselement 40 als Knotenpunkt für mehrere zusammenstoßende Rundprofilstäbe 1. Zwischen jeweils zwei parallel verlaufende Rundprofilstäbe 1 sind Anschlußleisten 10 aufgerastet (Fig. 4). Das Universal-Verbindungselement 40 besteht aus zwei identischen Halbschalen 41, die jeweils sich kreuzende, halbkreisförmig ausgebildete Nuten 42 aufweisen, deren Radius dem Radius der Rundprofilstäbe 1 entspricht. Im Kreuzungspunkt der Nuten 42 befindet sich eine senkrecht hierzu verlaufende Durchgangsbohrung 43, deren Durchmesser dem Außendurchmesser der Rundprofilstäbe 1 entspricht. Eine Ecke 44 jeder Halbschale 41 ist freigeschnitten und mit einem Schlitz 45 mit der Durchgangsbohrung 43 verbunden. Auf der auf gleicher Seite gegenüberliegenden Ecke der Halbschale 41 ist ein der freigeschnittenen Ecke 44 entsprechendes Profilstück 46 angeformt, wobei das Profilstück 46 einerseits und die gegenüberliegende Ecke andererseits noch zusätzliche Führungsstege und Führungsnuten 47 bzw. 48 aufweisen. Insgesamt vier Inbus-Schrauben 49 dienen zum festen Verbinden der beiden Halbschalen 41 und damit zum festen Einspannen der Enden der zu verbindenden Rundprofilstäbe 1. Von den vier Inbus-Schrauben 49 laufen zwei parallel zur Durchgangsbohrung 43 und zwei quer zu dieser.

Die Figuren 18 bis 20 zeigen die Einzelmontage der hier beschriebenen Anschlußleiste 10, ohne daß diese auf Rundprofilstäbe 1 aufgerastet wird. Hierzu sind besondere Montageadapter 50 (Fig. 18) vorgesehen, welche in die äußeren Drahtführungslaschen 27 der Anschlußleiste 10 eingesteckt und zusammen mit der Anschlußleiste 10 auf einer ebenen Platte 51 mittels Schraubelementen 52 verschraubt werden. Die Montageadapter 50 weisen wiederum Drahtführungslaschen 53 auf, welche die vom Montageadapter 50 belegten Drahtführungslaschen 27 der Anschlußleiste 10 ersetzen. In die Durchtrittsschlitze 28 der bogenförmigen Ansätze 26 sind Erdkontaktlaschen 54 eingesteckt, die - ähnlich wie die Erdkontaktlaschen 29 - zur Verbindung mit einem auf die Anschlußleiste 10 aufgesteckten Überspannungsableitermagazin dienen. Die Erdkontaktlaschen 54 sind gemäß Fig. 19 durch Zusammenstecken aneinanderreihbar..

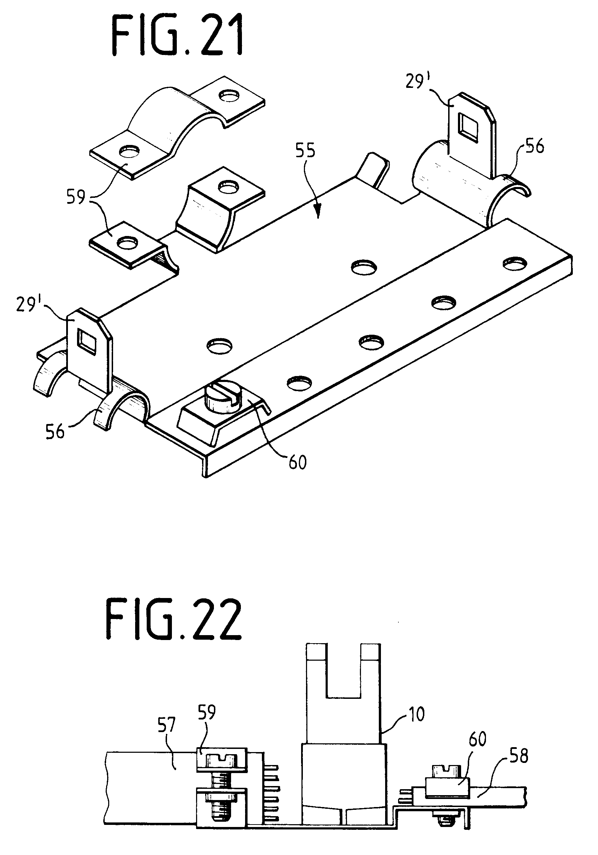

Die Figuren 21 und 22 zeigen ein Aufnahmeblech 55 mit seitlich abgewinkelten, gebogenen Laschen 56, deren Form den Rundprofilstäben 1 nachgebildet ist, derart, daß auf die Laschen 56 des Aufnahmebleches 55 eine Anschlußleiste 10 mit ihren bogenförmigen Ansätzen 26 aufrastbar ist. Auf diese Weise können geschirmte Leitungen 57, 58 an Anschlußleisten 10 angeschlossen werden, wobei Verbindungsschellen 59, 60 die Leitungen 57, 58 fixieren. Obwohl in Fig. 22 nur eine einzige Anschlußleiste 10 dargestellt ist, können selbstverständlich auch mehrere Anschlußleisten 10 auf einem entsprechend länger ausgebildeten Aufnahmeblech 55 nebeneinander auf die gebogenen Laschen 56 aufgesteckt werden, wodurch eine Kabelendeinrichtung gebildet wird. Die Laschen 56 tragen Erdkontaktlaschen 29′, die in die Schlitze 28 der Ansätze 26 der Anschlußleiste 10 eingreifen.

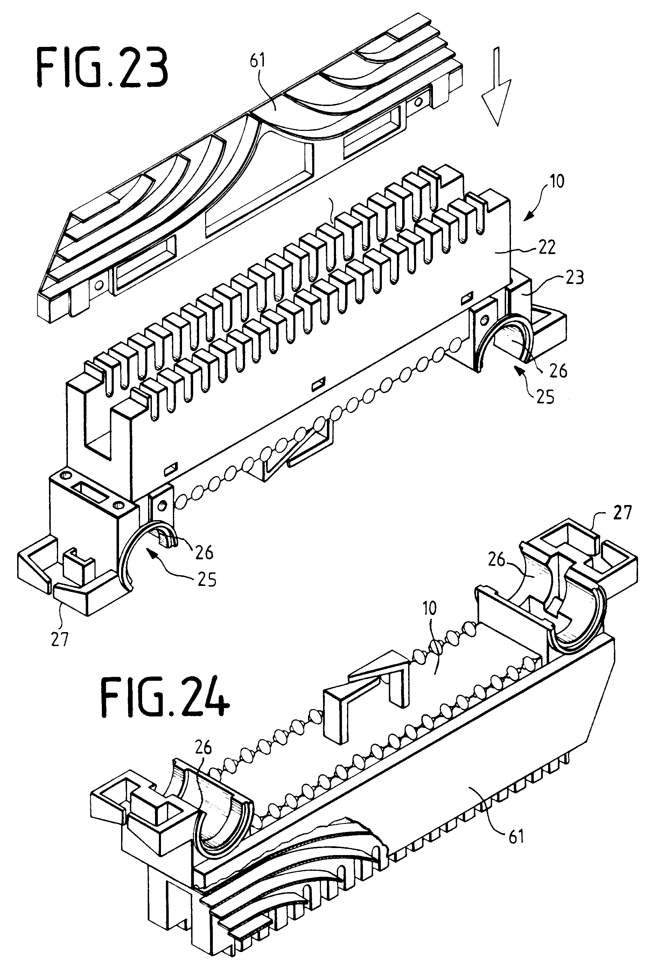

Die Fig. 23 und 24 zweigen die Anordnung von an sich bekannten Drahtführungsscheiben 61 an den Anschlußleisten 10, wozu besondere, nicht näher dargestellte Rastelemente auf den Seitenflächen der Anschlußleisten 10 zum Aufrasten der Drahtführungsscheiben 61 vorgesehen sind.

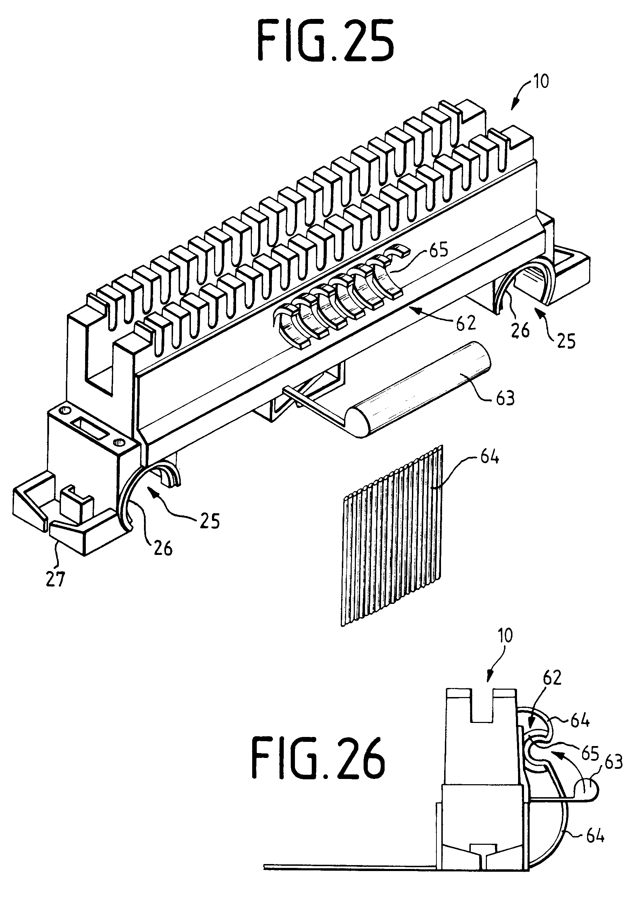

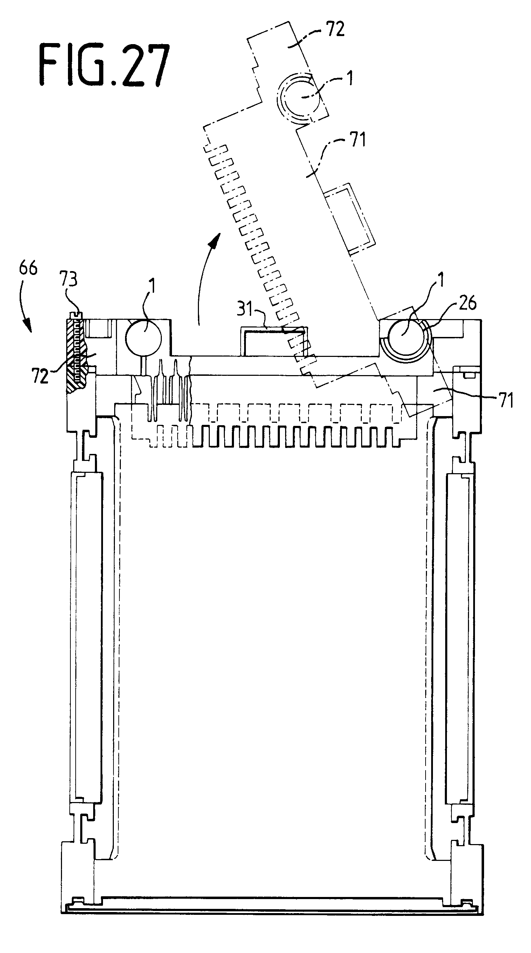

Die Fig. 25 zeigt eine Zugentlastungseinrichtung 62, die ähnlich wie die Drahtführungsscheiben 61 seitlich auf die Anschlußleiste 10 aufgerastet ist. Die Zugentlastungeinrichtung 62 umfaßt einen im Abstand zur Anschlußleiste 10 angeformten Führungskörper 63 für ein Flachbandkabel 64, das gem. Fig. 26 von unterhalb der Anschlußleiste 10 zwischen Führungskörper 63 und Seitenwand der Anschlußleiste 10 eingelegt ist, wobei zusätzliche C-förmige Führungskörper 65 an der Zugentlastungseinrichtung 62 angeformt sind. Nach Einlegen des Flachbandkabels 64 wird der Führungskörper 63 in den C-förmigen Führungskörper 65 eingedrückt, wie es der Pfeil in Fig. 28 andeutet. Das Flachbandkabel 64 wird somit sicher in der Zugentlastungseinrichtung 62 fixiert.

Die Fig. 27 zeigt ein 19-Zoll-Gehäuse 66 mit einer im Inneren am hinteren Ende des Gehäuses 66 angeordneten Rückwandverdrahtungsleiste 71, die der Anschlußleiste 10 nachgebildet ist. Die Rückwandverdrahtungsleiste 71 ist auf zwei Rundprofilstäben 1, 1′ aufgerastet, wobei der eine Rundprofilstab 1′ mit einer Tragschiene 72 verbunden ist. Durch Lösen einer Befestigungsschraube 73 wird die Tragschiene 72 zusammen mit der Profilschiene 1′ vom Gehäuse 66 gelöst. Mehrere hintereinander angeordnete Verdrahtungsleisten 71 sind somit aus dem rückwärtigen Teil des 19-Zoll-Gehäuses ausschwenkbar, wie es der Pfeil in Fig. 27 andeutet. Die Verdrahtungsleisten 71 mit den bogenförmigen Ansätzen 26 drehen sich hierbei um den fest mit dem 19-Zoll-Gehäuse 66 verbundenen Rundprofilstab 1. Eine aus dem 19-Zoll-Gehäuse geschwenkte Verdrahtungsleiste ist schematisch in Fig. 27 gezeigt. Die nicht dargestellten Drahtverbindungen zwischen den einzelnen Verdrahtungsleisten 71 werden somit in einfachster Weise außerhalb des 19-Zoll-Gehäuses 66 vorgenommen.

## Patentansprüche

1. Vorrichtung zur Halterung von Anschlußleisten der Fernmeldetechnik, bestehend aus einem Montagegestell, mindestens einer auf diesem angeordneten Anschlußleiste und mindestens einem Verbindungselement,
**dadurch gekennzeichnet,**
daß das Montagegestell aus mindestens einer, in einem Gestellteil (2) gelagerten Profilschiene (1) mit kreisrundem Querschnitt gebildet ist und daß die Anschlußleiste (10) als Verbindungselement (25) ein bogenförmiges Schnappelement (26) aufweist, das auf die Profilschiene (1) aufrastbar und auf der Profilschiene (1) verschiebbar ist.

2. Vorrichtung nach Anspruch 1,
**dadurch gekennzeichnet,**
daß zwei parallele Profilschienen (1) im Gestellteil (2) gelagert sind und daß die Anschlußleiste (10) mindestens ein Schnappelement (26) zur Verbindung mit einer Profilschiene aufweist.

3. Vorrichtung nach Anspruch 1,
**dadurch gekennzeichnet,**
daß zwei parallele Profilschienen (1) im Gestellteil (2) gelagert sind und daß die Anschlußleiste (10) zwei Schnappelemente (26) zur Verbindung der Profilschienen (1) aufweist.

4. Vorrichtung nach einem der Ansprüche 1-3,
**dadurch gekennzeichnet,**
daß die bogenförmigen Ansätze (26) der Anschlußleisten (10) die Profilschienen (1) um einen Winkel von mehr als 180° umschließen.

5. Vorrichtung nach einem der Ansprüche 1-4,
**dadurch gekennzeichnet,**
daß die Profilschienen (1) an mindestens einem Ende mit Ringnuten (15) und die zugehörigen Gestellteile (2) mit Schlitzen (16) zum Eingreifen der Ringnuten (15) der Profilschienen (1) versehen sind, wobei die Schlitze (16) einen Schlitzteil mit einer Weite, die größer als der Durchmesser der Profilschienen (1) ist, und mit einem daran anschließenden Schlitzteil mit einer Weite, die kleiner als der Durchmeser der Profilschienen (1) ist, und einen in Schlitzrichtung verlaufenden Klemmsteg (17) aufweisen, der in die Ringnut (15) der Profilschienen (1) eingreift und diese gegen das eine Ende des Schlitzes (16) drückt, in welchem die Schlitzwände (18) in die Ringnut eingreifen.

6. Vorrichtung nach einem der Ansprüche 1-5,
**dadurch gekennzeichnet,**
daß Distanzclips (32, 33) zum Aufrasten auf die Profilschienen (1) vorgesehen und aus Ringscheibenteilen gebildet sind, deren Öffnungswinkel kleiner als 180° ist.

7. Vorrichtung nach einem der Ansprüche 1-6,
**dadurch gekennzeichnet,**
daß zusammensteckbare Aufnahmeelemente (34) zur Halterung der Profilschienen (1) im Abstand zu den Gestellteilen (2) vorgesehen sind.

8. Vorrichtung nach Anspruch 7,
**dadurch gekennzeichnet,**
daß die Aufnahmeelemente (34) auf eine die Gestellteile (2) bildende Tragschiene (38) aufrastbar sind.

9. Vorrichtung nach einem der Ansprüche 1-8,
**dadurch gekennzeichnet,**
daß universelle Verbindungselemente (40) zur Verbindung von mehreren kreuzenden Profilschienen (1) vorgesehen sind.

10. Vorrichtung nach einem der Ansprüche 1-9,
**dadurch gekennzeichnet,**
daß Montageadapter (50) zur Verbindung einzelner Anschlußleisten (10) mit aufeinander aufsteckbaren Erdkontaktklemmen (54) vorgesehen sind.

11. Vorrichtung nach einem der Ansprüche 1-10,
**dadurch gekennzeichnet,**
daß ein Aufnahmeblech (55) für einzelne oder mehrere der mit den bogenförmigen Ansätzen (26) versehenen Anschlußleisten (10) vorgesehen ist, dessen Randbereiche halbkreisförmig zur Bildung von den Profilschienen (1) nachgeformten Laschen (56) ausgeformt sind.

12. Vorrichtung nach einem der Ansprüche 1-11,
**dadurch gekennzeichnet,**
daß an die Seitenflächen der Anschlußleisten (10) Zusatzbauteile wie Drahtführungsscheiben (61) oder Zugentlastungseinrichtungen (62) für Flachbandkabel (64) anklemmbar sind.

13. Vorrichtung nach einem der Ansprüche 1-12,
**dadurch gekennzeichnet,**
daß die Außenwände des Oberteils (22) der Anschlußleiste (10) mit Durchtrittsschlitzen (28) versehen sind und daß metallische Erdkontaktlaschen (29) vorgesehen sind, die auf die Profilstäbe (1) aufklemmbar, durch die Durchtrittsschlitze durchsteckbar und mit Überspannungsableitermagazinen kontaktierbar sind, die in die Anschlußleiste (10) einsteckbar sind.

14. Vorrichtung nach Anspruch 13,
**dadurch gekennzeichnet,**
daß die Erdkontaktlaschen (29) im unteren Bereich drei bogenförmige Laschen (68) aufweisen, deren Innenkontur den Profilstäben (1) nachgebildet ist.

## Claims

1. A device for holding telecommunication connector blocks, comprising a mounting structure, at least one connector block disposed thereupon and at least one connection element, characterized by that the mounting structure is formed of at least one section rail (1) borne in a structure portion (2) and having a circular cross-section, and that the connector block (10) comprises as a connection element (25) a curved snap-fit element (26), which is latchable onto the section rail (1) and is displaceable thereon.

2. A device according to claim 1, characterized by that two parallel section rails (1) are borne in the structure portion (2), and that the connector block (10) comprises at least one snap-fit element (26) for a connection with a section rail (1).

3. A device according to claim 1, characterized by that two parallel section rails (1) are borne in the structure portion (2), and that the connector block (10) comprises two snap-fit elements (26) for a connection of the section rails (1).

4. A device according to one of claims 1 or 3, characterized by that the curved extensions (26) of the connector blocks (10) enclose the section rails (1) by an angle of more than 180°.

5. A device according to one of claims 1 to 4, characterized by that the section rails (1) are provided at least at one end with annular grooves (15), and that the respective structure portions (2) are provided with slots (16) for engagement of the annular grooves (15) of the section rails (1), said slots (16) having a slot portion of a width being larger than the diameter of the section rails (1), and having an adjacent slot portion of a width being smaller than the diameter of the section rails (1), and having a clamping web (17) extending in the direction of the slot, said clamping web engaging into the annular groove (15) of the section rails (1) and pressing them against the one end of the slot (16), wherein the slot walls (18) engage into the annular groove (15).

6. A device according to one of claims 1 to 5, characterized by that spacer clips (32, 33) are provided for latching onto the section rails (1), and that they are formed of annular disc pieces, the aperture angles of which being smaller than 180°.

7. A device according to one of claims 1 to 6, characterized by that reception elements (34) to be put together are provided for holding the section rails (1), spaced from the structure portions (2).

8. A device according to claim 7, characterized by that the reception elements (34) are latchable onto a support rail (38) forming the structure portions (2).

9. A device according to one of claims 1 to 8, characterized by that universal connection elements (40) are provided for connecting several crossing section rails (1).

10. A device according to one of claims 1 to 9, characterized by that mounting adapters (50) are provided for connecting individual connector blocks (10) with earthing contact terminals (54) to be plugged onto each other.

11. A device according to one of claims 1 to 10, characterized by that a receiving sheet (55) for individual or several connector blocks (10) provided with the curved extensions (26) is provided, the border areas of said receiving sheet being shaped semicircularly for forming tongues (56) shaped to the section rails (1).

12. A device according to one of claims 1 to 11, characterized by that at the side faces of the connector blocks (10), additional components such as wire guide discs (61) or strain-relief devices (62) for flat cables (64) can be clamped down.

13. A device according to one of claims 1 to 12, characterized by that the outside walls of the upper portion (22) of the connector block (10) are provided with through-passing slots (28), and that metal earthing contact lugs (29) are provided, which can be clamped down onto the section rods (1), passed through the through-passing slots and contacted with surge-arrester magazines to be inserted into the connector block (10).

14. A device according to claim 13, characterized by that the earthing contact lugs (29) comprise three curved lugs (68) in the lower section thereof, the inner contour of said lugs being shaped correspondingly to the section rods (1).

## Revendications

1. Dispositif de fixation de blocs de connexion pour la technique des télécommunications, comprenant un bâti de montage, au moins un bloc de connexion disposé sur ce dernier et au moins un élément de liaison **caractérisé en ce que**
le bâti de montage est formé par au moins un rail profilé (1), logé dans une pièce de bâti (2) avec une section circulaire et que le bloc de connexion (10) présente comme élément de liaison (25) un élément encliquetable (26) cintré, pouvant être cranté sur le rail profilé (1) et qui est déplaçable sur le rail profilé (1).

2. Dispositif selon la revendication 1,
**caractérisé en ce que**
deux rails profilés (1) parallèles sont logés dans la pièce de bâti (2) et que le bloc de connexion (10) présente au moins un élément encliquetable (26) pour la liaison avec un rail profilé.

3. Dispositif selon la revendication 1,
**caractérisé en ce que**
deux rails profilés parallèles (1) sont logés dans la pièce de bâti (2) et que le bloc de connexion (10) présente deux éléments encliquetables (26) pour la liaison des rails profilés (1).

4. Dispositif selon l'une des revendications 1 à 3,
**caractérisé en ce que**
les talons cintrés (26) des blocs de connexion (10) entourent les rails profilés (1) d'un angle de plus de 180°.

5. Dispositif selon l'une des revendications 1 à 4,
**caractérisé en ce que**
les rails profilés (1) sont munis au moins à une extrémité de rainures annulaires (15) et les pièces de bâti (2) correspondantes de fentes (16) engrènant des les rainures (15) des rails profilés (1), les fentes (16) ayant une partie d'une largeur supérieure au diamètre des rails profilés (1) et une partie adjacente d'une longueur inférieure au diamètre des rails profilés (1), et une barrette de serrage (17) dans la même direction que la fente, engrènant dans la rainure annulaire (15) des rails profilés (1) et pressant ce dernier contre l'une des extrémités de la fente (16) dans laquelle les parois de la fente (18) engrènent dans la rainure annulaire.

6. Dispositif selon l'une des revendications 1 à 5,
**caractérisé en ce que**
des clips d'écartement (32, 33) sont prévus pour le crantage sur les rails profilés (1) et réalisés en pièces de rondelles dont l'angle d'ouverture est inférieur à 180°.

7. Dispositif selon l'une des revendications 1 à 6,
**caractérisé en ce que**
des éléments de réception (34) emboîtables sont prévus pour maintenir les rails profilés à un certain écart des pièces de bâti (2).

8. Dispositif selon la revendication 7,
**caractérisé en ce que**
les éléments de réception (34) peuvent être crantés sur un rail support (38) formant les pièces de bâti (2).

9. Dispositif selon l'une des revendications 1 à 8,
**caractérisé en ce que**
des éléments de liaison universels (40) sont prévus pour relier plusieurs rails profilés croisés (1).

10. Dispositif selon l'une des revendications 1 à 9,
**caractérisé en ce que**
des adaptateurs de montage (50) sont prévus pour relier différents blocs de connexion (10) avec des contacts de mise à la terre (54) emboîtables l'un sur l'autre.

11. Dispositif selon l'une des revendications 1 à 10,
**caractérisé en ce que**
une tôle de réception (55) est prévue pour certains ou plusieurs des blocs de connexion (10) munie des talons cintrés (26), dont les zones de bord sont réalisées en demi-cercle pour former des languettes (56) de la forme des rails profilés (1).

12. Dispositif selon l'une des revendications 1 à 11,
**caractérisé en ce que**
des composants additionnels, tels que disques de guidage et de fils (61) ou dispositifs de décharge de traction (62) pour câbles à ruban (64), peuvent être serrés contre les faces latérales des blocs de connexion (10).

13. Dispositif selon l'une des revendications 1 à 12,
**caractérisé en ce que**
les parois extérieures de la partie supérieure (22) du bloc de connexion (10) sont munies de fentes de passage (28) et que des barres de contact de mise à la terre (29) métalliques sont prévues, qui peuvent être serrées sur les barres profilées (1), passées à travers les fentes de passage et mises en contact avec des parasurtensions pouvant être emboîtés dans les blocs de connexion (10).

14. Dispositif selon la revendication 13,
**caractérisé en ce que**
les barres de contact de mise à la terre (29) présentent, dans la zone inférieure, trois languettes cintrées (68), dont le contour intérieur correspond aux barres profilées (1).
